# EUROPÄISCHE PATENTANMELDUNG

(11) **EP 4 000 552 A1**
(43) Veröffentlichungstag der Anmeldung: **25.05.2022**
(21) Anmeldenummer: 20207470.4
(22) Anmeldetag: 13.11.2020
(51) Int. Cl.: A61C 5/77, A61C 13/00

(54) **COMPUTERIMPLEMENTIERTES VERFAHREN ZUM ERSTELLEN EINES DIGITALEN VOLUMENMODELLS EINES PRIMÄRTEILS UND EINES DIGITALEN VOLUMENMODELLS EINES SEKUNDÄRTEILS EINES ZAHNERSATZES UND VERFAHREN ZUM HERSTELLEN EINES PRIMÄRTEILS UND/ODER EINES SEKUNDÄRTEILS EINES ZAHNERSATZES**

(71) Anmelder: millhouse GmbH, 65719 Hofheim (DE)
(72) Erfinder: Die Erfindernennung liegt noch nicht vor
(74) Vertreter: Franke, Markus

(57) **Zusammenfassung**

Die Erfindung betrifft computerimplementiertes Verfahren zum Erstellen eines digitalen Volumenmodells eines Primärteils (1) und eines digitalen Volumenmodells eines Sekundärteils (2) eines Zahnersatzes. Ferner betrifft die Erfindung eine Vorrichtung zur Datenverarbeitung, umfassend Mittel zur Ausführung des Verfahrens und ein Computerprogramm, umfassend Befehle, die bei der Ausführung des Programms durch einen Computer diesen veranlassen, das Verfahren auszuführen. Ferner betrifft die Erfindung ein Verfahren zum Herstellen eines Primärteils (1) und/oder eines Sekundärteils (2) eines Zahnersatzes. Durch das erfindungsgemäße Verfahren wird ein besonders hohes Maß an Passgenauigkeit zwischen dem Volumenmodell des Primärteils (1) und dem Volumenmodell des Sekundärteils (2) im Bereich der aneinander zugewandten Flächen von Primärteil (1) und Sekundärteil (2) erreicht, da zur Erzeugung von Funktionsflächen (8) aufweisenden Flächen des Volumenmodells des Primärteils (1) und des Sekundärteils (2) die korrespondierende Fläche des Volumenmodells des jeweiligen anderen Teils (1, 2) verwendet wird.

## Beschreibung

Die Erfindung betrifft computerimplementiertes Verfahren zum Erstellen eines digitalen Volumenmodells eines Primärteils und eines digitalen Volumenmodells eines Sekundärteils eines Zahnersatzes. Ferner betrifft die Erfindung eine Vorrichtung zur Datenverarbeitung, umfassend Mittel zur Ausführung des Verfahrens und ein Computerprogramm, umfassend Befehle, die bei der Ausführung des Programms durch einen Computer diesen veranlassen, das Verfahren auszuführen. Ferner betrifft die Erfindung ein Verfahren zum Herstellen eines Primärteils und/oder eines Sekundärteils eines Zahnersatzes.

Ein Primärteil und ein Sekundärteil eines Zahnersatzes sind derart gestaltet, dass das Primärteil mit einem in einem der Aufnahme des Zahnersatzes dienenden Mundbereich ausgebildeten Lagerabschnitt verbindbar ist. Bei diesem Lagerabschnitt kann es sich beispielsweise um einen bearbeiteten Zahnstumpf handeln, wobei das Primärteil typischerweise auf den Lagerabschnitt aufgeschoben und in der Regel mit diesem verklebt wird. Bei dem Lagerabschnitt kann es sich aber durchaus auch um einen Stift oder eine Implantatschraube handeln, auf die das Primärteil typischerweise aufgesteckt bzw. aufgeschoben wird. Auch bei einer Gestaltung mit einem Stift bzw. einer Implantatschraube wird das Primärteil typischerweise mit dem Lagerabschnitt verklebt.

Bei dem Zahnersatz kann es sich beispielsweise um eine Krone, insbesondere eine Doppelkrone, beispielsweise eine Teleskopkrone oder Konuskrone, handeln.

Bei der späteren Anwendung des Zahnersatzes im Mund des Patienten wird auf dieses Primärteil ein Sekundärteil angeordnet, typischerweise aufgeschoben, welches beispielsweise eine Krone oder Brücke sein kann. Bei einem solchen Zahnersatz ist die Passgenauigkeit zwischen dem Sekundärteil und dem Primärteil sowie dem Primärteil und dem Lagerabschnitt wesentlich, um beispielsweise die problemlose Entnahme des Sekundärteils von dem Primärteil zu ermöglichen, insbesondere die problemlose Entnahme einer Brücke zu ermöglichen, die auf zwei Primärteilen angeordnet wird. Die besondere Problematik besteht darin, dass die Primärteile und die Sekundärteile typischerweise unabhängig voneinander gefertigt werden. Daher ist die Anpassung des Primärteils an das Sekundärteil bzw. umgekehrt relativ aufwendig. Häufig muss nach der Herstellung des Primärteils und des Sekundärteils und Vorliegen beider Teile noch eine händische Anpassung der Teile aufeinander erfolgen, beispielsweise durch einen Zahnarzt. Dies ist Zeitaufwendig und auch fehleranfällig. Insbesondere kann typischerweise nur ein Materialabtrag an den Teilen erfolgen. Ein nachträglicher Materialauftrag ist nur schwer möglich und führt typischerweise zu eine Verminderung der Haltbarkeit des Zahnersatzes.

Aus der WO 2012/045314 A1 ist ein Verfahren zum Entwerfen einer Krone aufweisend eine innere Krone und eine äußere Krone bekannt. Ferner ist aus der WO 2013/079724 A1 ein Verfahren zur Herstellung von zahntechnischen Primär- und Sekundärteilen bekannt.

Aufgabe der Erfindung ist es daher, die Herstellung aufeinander abgestimmter Primärteile und Sekundärteile zu erleichtern, insbesondere ist es Aufgabe der Erfindung, das Primärteil unabhängig vom Sekundärteil bzw. das Sekundärteil unabhängig von dem Primärteil herzustellen.

Das erfindungsgemäße computerimplementierte Verfahren dient dem Erstellen eines digitalen Volumenmodells eines Primärteils und eines digitalen Volumenmodells eines Sekundärteils eines Zahnersatzes. Dieses digitale Volumenmodell bzw. die beiden digitalen Volumenmodelle können dann verwendet werden, um mittels eines computergestützten Fertigungsverfahrens das Primärteil und/oder das Sekundärteil herzustellen unter Verwendung des jeweiligen digitalen Volumenmodells. Bei dem Zahnersatz handelt es sich insbesondere um eine Doppelkrone, beispielsweise eine Teleskopkrone oder Konuskrone. Das Primärteil ist mit einem in einem der Aufnahme des Zahnersatzes dienenden Mundbereich ausgebildeten Lagerabschnitt verbindbar. Bei dem Lagerabschnitt kann es sich beispielsweise um einen geschliffenen Zahn, einen Stift und/oder eine Implantatschraube handeln. Das Primärteil weist eine dem Lagerabschnitt zuzuwendende Innenfläche und eine dem Lagerabschnitt abzuwendende Außenfläche auf. Das Sekundärteil weist eine dem Primärteil zuzuwendende Innenfläche und eine dem Primärteil abzuwendende Außenfläche auf. Die Außenfläche des Primärteils und die Innenfläche des Sekundärteils weisen zueinander korrespondierende Funktionsflächen auf. Bei den Funktionsflächen handelt es sich insbesondere um Friktionsflächen. Das erfindungsgemäße Verfahren umfasst:
- Bereitstellen eines 3D-Scans des der Aufnahme des Zahnersatzes dienenden Mundbereichs,
- Erzeugen der Innenfläche des Volumenmodells des Primärteils unter Verwendung des 3D-Scans des Mundbereichs derart, dass zumindest ein Teilbereich der Innenfläche des Volumenmodells des Primärteils zumindest zu einem Teilbereich einer Außenfläche des Lagerabschnitts korrespondiert,
- Erzeugen oder Bereitstellen der Außenfläche des Volumenmodells des Sekundärteils.

Die Außenfläche des Volumenmodells des Sekundärteils ist vorzugsweise in der Art der Außenfläche eines natürlichen Zahns gestaltet und fügt sich vorzugsweise in die umliegenden Zähne ein.

Das erfindungsgemäße Verfahren umfasst ferner die folgenden Verfahrensschritte:
- Erzeugen oder Bereitstellen der Außenfläche des Volumenmodells des Primärteils,
- Erzeugen der Innenfläche des Volumenmodells des Sekundärteils unter Verwendung eines die Funktionsfläche aufweisenden Bereichs der Außenfläche des Volumenmodells des Primärteils derart, dass die Innenfläche des Volumenmodells des Sekundärteils eine zu der Funktionsfläche der Außenfläche des Volumenmodells des Primärteils korrespondierende Funktionsfläche aufweist.

Zusätzlich oder alternativ kann das erfindungsgemäße Verfahren auch die folgenden Verfahrensschritte umfassen:
- Erzeugen oder Bereitstellen der Innenfläche des Volumenmodells des Sekundärteils,
- Erzeugen der Außenfläche des Volumenmodells des Primärteils unter Verwendung eines die Funktionsfläche aufweisenden Bereichs der Innenfläche des Volumenmodells des Sekundärteils derart, dass die Außenfläche des Volumenmodells des Primärteils eine zu den Funktionsflächen der Innenfläche des Volumenmodells des Sekundärteils korrespondierende Funktionsfläche aufweist.

Durch das erfindungsgemäße Verfahren wird ein besonders hohes Maß an Passgenauigkeit zwischen dem Volumenmodell des Primärteils und dem Volumenmodell des Sekundärteils im Bereich der aneinander zugewandten Flächen von Primärteil und Sekundärteil erreicht, da zur Erzeugung der die Funktionsflächen aufweisenden Flächen des Volumenmodells des Primärteils und des Sekundärteils die korrespondierende Fläche des Volumenmodells des jeweiligen anderen Teils verwendet wird. Da es sich um ein computerimplementiertes Verfahren handelt, ist es unproblematisch möglich, aufgrund der erzeugten oder bereitgestellten Außenfläche des Volumenmodells des Primärteils bzw. aufgrund der Erzeugung oder Bereitstellung der Innenfläche des Volumenmodells des Sekundärteils die korrespondierende Fläche des Volumenmodells des anderen Teils zu erzeugen und somit eine hohe Passgenauigkeit im Bereich der Funktionsflächen des jeweiligen Volumenmodells zu erreichen. Zudem kann anhand des digitalen Volumenmodells schnell und einfach geprüft werden, ob das Primärteil und/oder das Sekundärteil spezifischen Anforderungen für die Fertigung (Mindestradien, Mindeststärke etc.) oder sonstigen materialspezifischen Anforderungen (Mindeststärke etc.) genügt und die Gestaltung des Primärteils und des Sekundärteils insbesondere im Bereich der zugewandten Flächen angepasst werden.

Insbesondere ist es für die Durchführung des computerimplementierten Verfahrens nicht notwendig, dass das Primärteil oder das Sekundärteil tatsächlich vorliegen, da der gesamte Prozess der Erstellung der Volumenmodelle des Primärteils und des Sekundärteils digital bzw. virtuell erfolgen kann. Insbesondere ist es nicht notwendig, dass zur Erstellung des Volumenmodells des Sekundärteils ein 3D-Scan des Primärteils vorliegt oder umgekehrt zur Erstellung des Volumenmodells des Primärteils ein 3D-Scan des Sekundärteils vorliegt. Dadurch ist die Herstellung des Primärteils und des Sekundärteils besonders zeitsparend, insbesondere zeitgleich oder zeitlich überlappend, möglich.

In einer besonders bevorzugten Ausführungsform des Verfahrens ist daher vorgesehen, dass bei der Durchführung des Verfahrens weder das Primärteil noch das Sekundärteil vorliegen.

Als besonders vorteilhaft wird es angesehen, wenn das Sekundärteil entlang einer Einschubrichtung auf das Primärteil aufschiebbar ist.

In einer bevorzugten Ausführungsform des Verfahrens erfolgt das Erzeugen des Volumenmodells des Primärteils in einem ersten Koordinatensystem und das Erzeugen des Volumenmodells des Sekundärteils in einem zweiten Koordinatensystem, wobei das erste Koordinatensystem und das zweite Koordinatensystem identisch sind oder Parameter zur Durchführung einer Koordinatentransformation bekannt sind. Dies ist insbesondere dann von Vorteil, wenn der 3D-Scan des Mundbereichs als Datensatz in einem ersten Koordinatensystem vorliegt und die Außenfläche des Volumenmodells des Sekundärteils als Datensatz in einem zweiten Koordinatensystems vorliegt.

Es ist durchaus denkbar, dass die Innenfläche des Volumenmodells des Primärteils als Datensatz in einem ersten Koordinatensystem vorliegt und die Außenfläche des Volumenmodells als Datensatz in einem zweiten Koordinatensystem vorliegt, wobei das erste Koordinatensystem und das zweite Koordinatensystem identisch sind oder Parameter zur Durchführung einer Koordinatentransformation bekannt sind.

Es wird als besonders vorteilhaft angesehen, wenn der Datensatz des ersten Koordinatensystems mittels der Koordinatentransformation in das zweite Koordinatensystem überführt wird bzw. umgerechnet wird oder der Datensatz des ersten Koordinatensystems mittels der Koordinatentransformation in das erste Koordinatensystem überführt wird bzw. umgerechnet wird. Es ist aber auch durchaus denkbar, dass die Datensätze in ein drittes Koordinatensystem überführt bzw. umgerechnet werden, das nicht identisch ist mit dem ersten Koordinatensystem oder dem zweiten Koordinatensystem.

Als besonders vorteilhaft wird es angesehen, wenn die Außenflächen des Volumenmodells des Primärteils und die Innenfläche des Volumenmodells des Primärteils entlang einer geschlossenen Verbindungslinie oder entlang einer geschlossenen Verbindungsfläche miteinander verbunden sind und/oder die Außenfläche des Volumenmodells des Sekundärteils und die Innenfläche des Volumenmodells des Sekundärteils entlang einer geschlossenen Verbindungslinie oder entlang einer geschlossenen Fläche miteinander verbunden sind, insbesondere die das Volumenmodell begrenzenden Flächen des Primärteils und/oder des Sekundärteils geschlossene Flächen sind. Bei einer derartigen Ausführungsform ist die Handhabung der Volumenmodelle in einem üblichen CAD-Programm erleichtert, da typische Funktionen derartiger Programme nur anhand von geschlossenen Volumenmodellen mit Flächen durchführbar sind.

In einer bevorzugten Ausführungsform ist vorgesehen, dass die zueinander korrespondierenden Funktionsflächen Anschlagsflächen und/oder Führungsflächen und/oder Friktionsflächen und/oder Dichtflächen aufweisen.

In einer bevorzugten Ausführungsform ist vorgesehen, dass die Innenfläche des Volumenmodells des Sekundärteils identisch ist mit der Außenfläche des Volumenmodells des Primärteils oder bereichsweise ein Spalt zwischen der Innenfläche des Volumenmodells des Sekundärteils und der Außenfläche des Volumenmodells des Primärteils ausgebildet ist, insbesondere ein Spalt zwischen korrespondierenden Funktionsflächen zwischen 3 µm bis 5 µm beträgt.

Als besonders vorteilhaft wird es angesehen, wenn die Funktionsflächen des Primärteils und die korrespondierenden Funktionsflächen des Sekundärteils zueinander parallel sind.

In einer vorteilhaften Weiterbildung des Verfahrens ist vorgesehen, dass das Erzeugen der Außenfläche des Volumenmodells des Primärteils und das Erzeugen der Innenfläche des Volumenmodells des Sekundärteils zeitgleich erfolgt. Diese Ausführungsform ist besonders vorteilhaft, da bei einer Gestaltung der Außenfläche des Volumenmodells des Primärteils auch unmittelbar die Auswirkungen auf die Innenfläche des Volumenmodells des Sekundärteils ersichtlich sind. Beispielsweise kann bei einer Erzeugung der Außenfläche des Volumenmodells des Primärteils unmittelbar die Auswirkung auf die Innenfläche des Volumenmodells des Sekundärteils und somit die Auswirkungen auf das Volumenmodell des Sekundärteils als solches überprüft werden. Beispielsweise kann dann unmittelbar kontrolliert werden, ob Mindestdicken bzw. Mindestabstände oder sonstige fertigungsspezifische Einschränkungen bestehen, die sich negativ auf das tatsächlich herzustellende Sekundärteil auswirken. So kann ein zu geringer Abstand zwischen der Außenfläche des Volumenmodells des Sekundärteils und der Innenfläche des Volumenmodells des Sekundärteils dazu führen, dass die tatsächliche Herstellung des Sekundärteils nicht möglich ist oder das tatsächlich hergestellte Sekundärteil eine zu geringe Stabilität aufweist. Insbesondere kann bei einer zu geringen Stärke des Sekundärteils Bruchgefahr des tatsächlichen Sekundärteils bestehen.

Als besonders vorteilhaft wird es angesehen, wenn das Verfahren unter Verwendung eines CAD-Programms durchgeführt wird.

In einer bevorzugten Ausführungsform des Verfahrens ist vorgesehen, dass das Verfahren die folgenden Verfahrensschritte umfasst:
- Erzeugen eines Volumenmodells eines Körpers unter Verwendung des 3D-Scans des Mundbereichs derart, dass zumindest eine Innenfläche des Volumenmodells des Körpers zumindest zu einem die Funktionsfläche aufweisenden Teilbereich der Außenfläche des Lagerabschnitts korrespondiert, und das Volumenmodell des Körpers eine Außenfläche aufweist, wobei die Außenfläche des Volumenmodells des Körpers und die Innenfläche des Volumenmodells des Körpers entlang einer geschlossenen Verbindungslinie miteinander verbunden sind,
- Erzeugen des Volumenmodells des Primärteils und des Volumenmodells des Sekundärteils durch Erzeugen einer zwischen der Außenfläche und der Innenfläche des Körpers verlaufenden Trennfläche und Aufteilen des Volumenmodells des Körpers an dieser Trennfläche.

Diese Ausführungsform ist dahingehend als besonders vorteilhaft anzusehen, da eine separate Erstellung eines Volumenmodells des Primärteils und eines Volumenmodells des Sekundärteils und deren Anpassung aufeinander entfällt, da die relevanten Flächen zumindest weitestgehend durch die Trennfläche und der Aufteilung erzeugt werden. Es sind dann allenfalls noch geringe Korrekturen an der zu der Trennfläche korrespondierenden Außenfläche des Primärteils bzw. an der zu der Trennfläche korrespondierenden Innenfläche des Sekundärteils notwendig, um die finale Innenfläche des Sekundärteils und die finale Außenfläche des Primärteils im Volumenmodell zu erzeugen.

Die erfindungsgemäße Vorrichtung zur Datenverarbeitung umfasst Mittel zur Ausführung des erfindungsgemäßen computerimplementierten Verfahrens, insbesondere Mittel zur Ausführung einer oder mehrerer der beschriebenen bevorzugten Ausführungsform des Verfahrens.

Das erfindungsgemäße Computerprogramm umfasst Befehle, die bei der Ausführung des Programms durch einen Computer diesen veranlassen, das erfindungsgemäße computerimplementierte Verfahren auszuführen.

Das erfindungsgemäße Verfahren zum Herstellen eines Primärteils und/oder eines Sekundärteils eines Zahnersatzes umfasst die folgenden Verfahrensschritte:
- Ausführen des erfindungsgemäßen computerimplementierten Verfahrens,
- Herstellen des Primärteils und/oder des Sekundärteils, basierend auf dem Volumenmodell des Primärteils und/oder dem Volumenmodell des Sekundärteils mittels eines computergestützten Fertigungsverfahrens, insbesondere mittels einer CNC-Werkzeugmaschine.

Das Primärteil und das Sekundärteil können unabhängig voneinander hergestellt werden auf Basis des jeweiligen Volumenmodells. Dies ist insbesondere dann von Vorteil, wenn das Primärteil oder das Sekundärteil ein weiteres Mal hergestellt werden muss, beispielsweise bei Verlust des Primärteils oder Verlust des Sekundärteils oder einer Beschädigung eines der Teile.

Dennoch wird es als besonders vorteilhaft angesehen, wenn das Herstellen des Sekundärteils und das Herstellen des Primärteils zumindest teilweise zeitgleich, insbesondere zeitgleich, erfolgt. Dadurch wird bei der Fertigung erheblich Zeit eingespart, wodurch Lieferzeiten des Zahnersatzes erheblich reduziert werden können.

Als besonders vorteilhaft wird es angesehen, wenn das Herstellen des Primärteils unabhängig von dem Sekundärteil erfolgt und/oder das Herstellen des Sekundärteils unabhängig von dem Primärteil erfolgt. Somit ist es nicht notwendig, dass zur Herstellung des Primärteils oder des Sekundärteils das jeweils andere Teil vorliegen muss.

In einer bevorzugten Ausführungsform werden zumindest die Funktionsflächen mittels eines spanenden Verfahrens hergestellt, vorzugsweise mittels eines Fräsverfahrens.

In den nachfolgenden Figuren wird das erfindungsgemäße Verfahren anhand von Ausführungsbeispielen näher erläutert, ohne hierauf beschränkt zu sein. Es zeigen:
- Fig. 1: ein 3D-Modell eines Mundbereichs mit freiliegenden, zugeschliffenen Teilen eines natürlichen Zahns,
- Fig. 2: das 3D-Modell gemäß Fig. 1 mit auf den zugeschliffenen Zähnen angeordneten Primärteilen,
- Fig. 3: das 3D-Modell gemäß Fig. 1 mit den auf den Primärteilen aufgesetzten Sekundärteilen,
- Fig. 4: ein Anordnung von einem Primärteil auf einem Lagerabschnitt, in einer Schnittansicht,
- Fig. 5: ein Sekundärteil in einer ersten perspektivischen Ansicht,
- Fig. 6: das Sekundärteil gemäß Fig. 5 in einer zweiten perspektivischen Ansicht,
- Fig. 7: ein zu dem Sekundärteil gemäß Fig. 5 korrespondierendes Primärteil in einer ersten perspektivischen Ansicht,
- Fig. 8: das Primärteil gemäß Fig. 7 in einer zweiten perspektivischen Ansicht,
- Fig. 9: eine Anordnung von einem Primärteil und einem Sekundärteil in einer Schnittansicht gemäß der Linie IX in Fig. 10,
- Fig. 10: die Anordnung gemäß Fig. 9 in einer Schnittansicht gemäß der Linie X in Fig. 9.

### Figurenbeschreibung

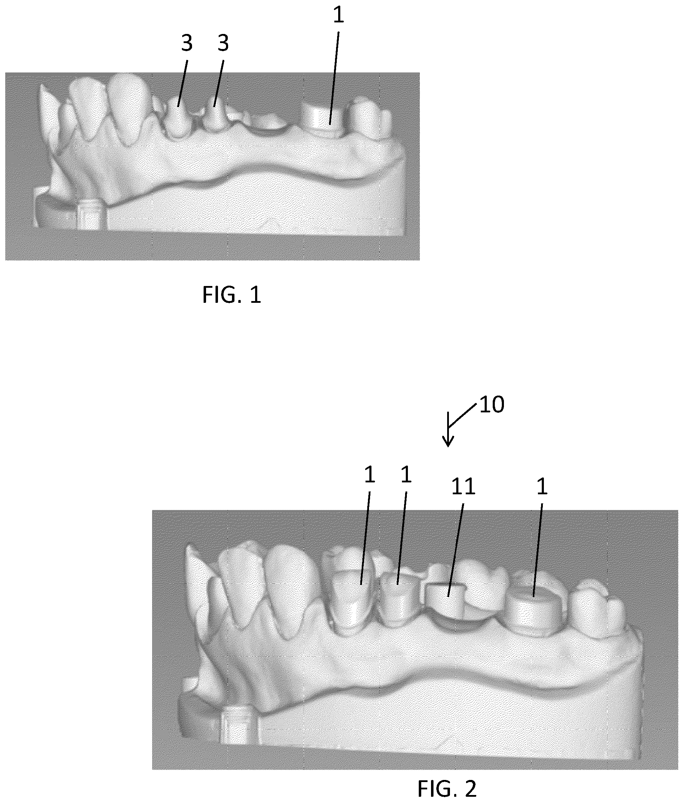

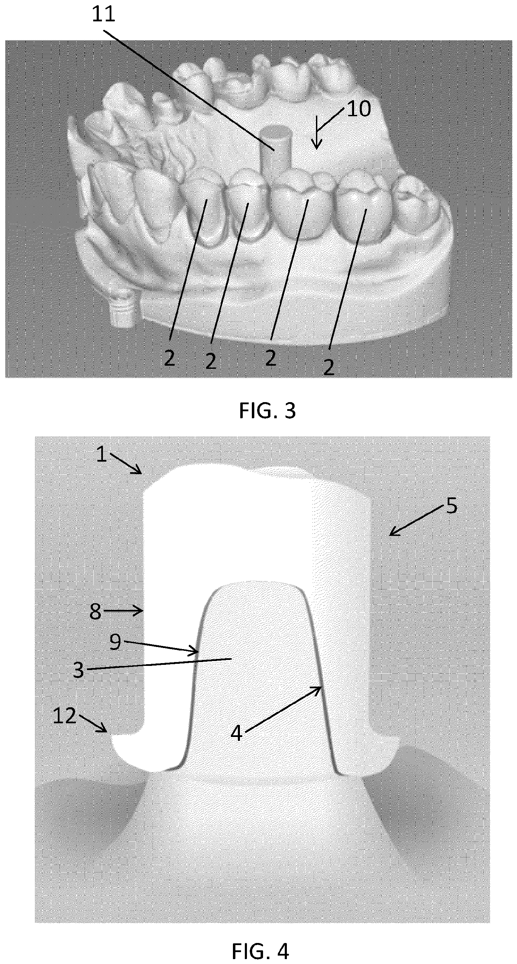

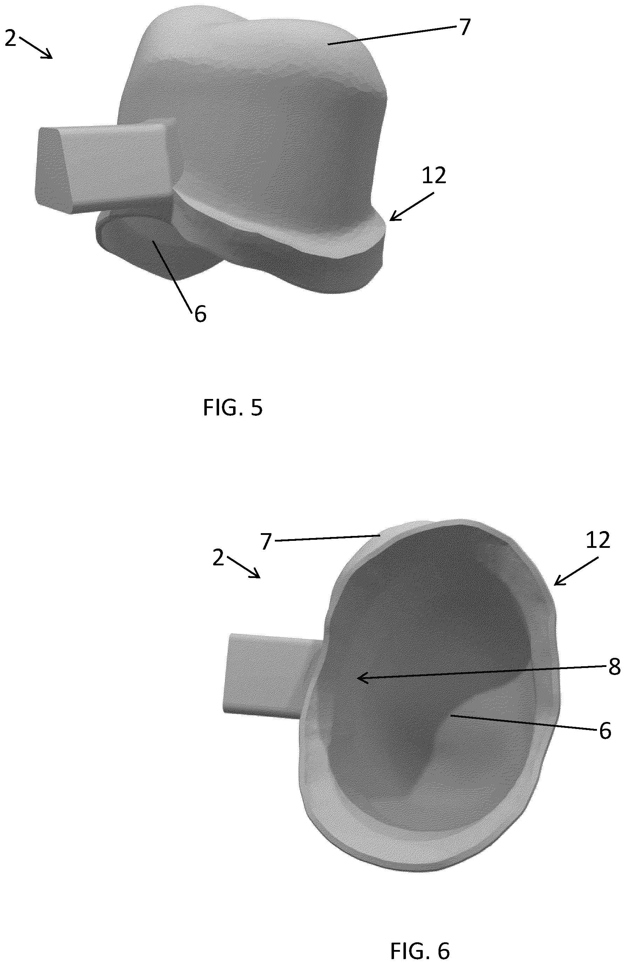

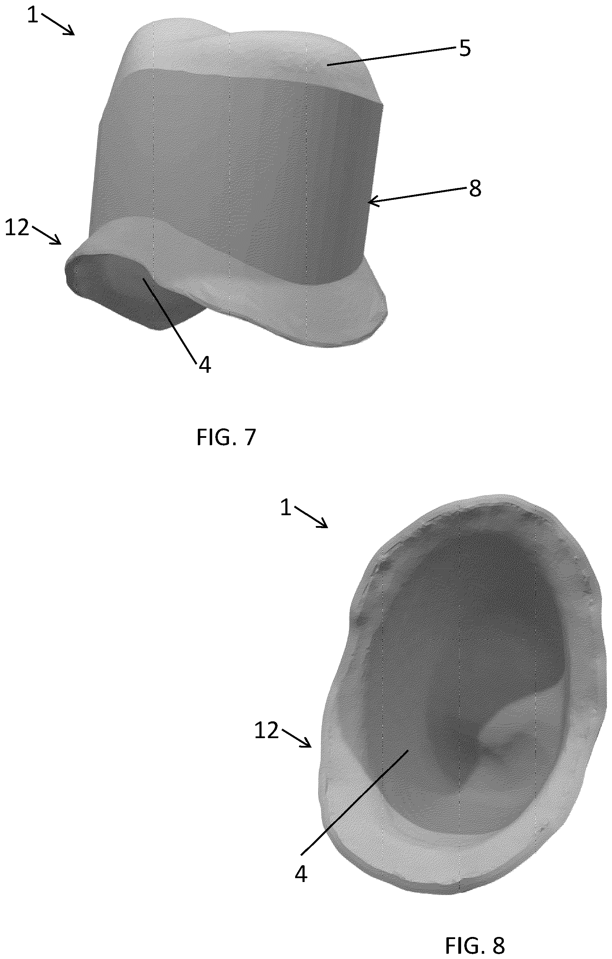

Die Erfindung betrifft unter anderem ein computerimplementiertes Verfahren zum Erstellen eines digitalen Volumenmodells eines Primärteils 1 und eines digitalen Volumenmodells eines Sekundärteils 2 eines Zahnersatzes. Bei dem Zahnersatz handelt es sich in dem vorliegenden Ausführungsbeispiel um eine Teleskopkrone. Das Primärteil 1 ist mit einem in einem der Aufnahme des Zahnersatzes dienenden Mundbereich ausgebildeten Lagerabschnitt 3 verbindbar. Wie insbesondere aus der Fig. 1 hervorgeht, handelt es sich vorliegend bei dem Lagerabschnitt 3 um einen entsprechend zugeschliffenen Teil eines natürlichen Zahns. Wie insbesondere aus den Fig. 7 und 8 hervorgeht, weist das Primärteil 1 eine dem Lagerabschnitt 3 zuzuwendende Innenfläche 4 und eine dem Lagerabschnitt 3 abzuwendende Außenfläche 5 auf. Wie insbesondere aus den Fig. 5 und 6 hervorgeht, weist das Sekundärteil 2 eine dem Primärteil 1 zuzuwendende Innenfläche 6 und eine dem Primärteil 1 abzuwendende Außenfläche 7 auf. Die Außenfläche 5 des Primärteils 1 und die Innenfläche 6 des Sekundärteils 2 weisen zueinander korrespondierende Funktionsflächen 8 auf. Die jeweilige Funktionsfläche 8 entspricht vorliegend im Wesentlichen einer Mantelfläche eines Kegelstumpfes mit im Wesentlichen elliptischer Grundfläche. Vorliegend ist das Sekundärteil 2 entlang einer Einschubrichtung 10 auf das Primärteil aufschiebbar. In der Fig. 3 ist die Einschubrichtung 10 durch den Kreiszylinder 11, nämlich dessen Längsachse, definiert.

Das Verfahren umfasst als Verfahrensschritt das Bereitstellen eines 3D-Scans des der Aufnahme des Zahnersatzes dienenden Mundbereichs. Das in der Fig. 1 gezeigte 3D-Modell basiert auf einem 3D-Scan des der Aufnahme des Zahnersatzes dienenden Mundbereichs.

Basierend auf diesem 3D-Scan wird die Innenfläche 4 des Volumenmodells des Primärteils 1 erzeugt, wobei zumindest ein Teilbereich der Innenfläche 4 des Volumenmodells des Primärteils 1 zumindest zu einem Teilbereich einer Außenfläche 9 des Lagerabschnitts 3 korrespondiert. Ferner wird die Außenfläche 7 des Volumenmodells des Sekundärteils 2 erzeugt oder bereitgestellt. Es ist beispielsweise denkbar, dass ein Zahnarzt mittels eines Computerprogramms die Außenfläche 7 des Volumenmodells des Sekundärteils 2 erzeugt, oder bereitstellt auf Basis von typischen anatomischen Merkmalen von natürlichen Zähnen, insbesondere unter Berücksichtigung der an den Zahneratz angrenzenden natürlichen Zähne.

In einer Ausführungsform des Verfahrens umfasst das Verfahren die folgenden Schritte:
- Erzeugen oder Bereitstellen der Außenfläche 5 des Volumenmodells des Primärteils 1,
- Erzeugen der Innenfläche 6 des Volumenmodells des Sekundärteils 2 unter Verwendung eines die Funktionsfläche 8 aufweisenden Bereichs der Außenfläche 5 des Volumenmodells des Primärteils 1.

Das Erzeugen erfolgt derart, dass die Innenfläche 6 des Volumenmodells des Sekundärteils 2 eine zu der Funktionsfläche 8 der Außenfläche 5 des Volumenmodells des Primärteils 1 korrespondierende Funktionsfläche 8 aufweist.

Die Fig. 2 zeigt das 3D-Modell gemäß Fig. 1 mit dem Unterschied, dass auf die beiden Lagerabschnitte 3 jeweils ein Primärteil 1 aufgesetzt ist. Das Aufsetzen der beiden Primärteile 1 erfolgt dabei in Einschubrichtung 10, die durch den Kreiszylinder 11 definiert ist.

Die Fig. 3 zeigt das 3D-Modell gemäß Fig. 2, wobei auf die Primärteile 1 die Sekundärteile 2 in Einschubrichtung 10 aufgeschoben sind.

Die Fig. 4 zeigt eine Anordnung von einem Primärteil 1 auf einem Lagerabschnitt 3 in einer Schnittansicht. Die Fig. 4 zeigt somit den Lagerabschnitt 3 mit darauf aufgeschobenem Primärteil 1. Die Funktionsfläche 8 der Außenfläche 5 des Primärteils 1 ist dabei kreiszylinderförmig ausgebildet. In einem unteren Bereich des Primärteils 1 weist das Primärteil 1 eine nach radial außen hervorstehende Schulter 12 auf. Diese Schulter 12 dient als Anschlags- und Dichtfläche für das Sekundärteil 2.

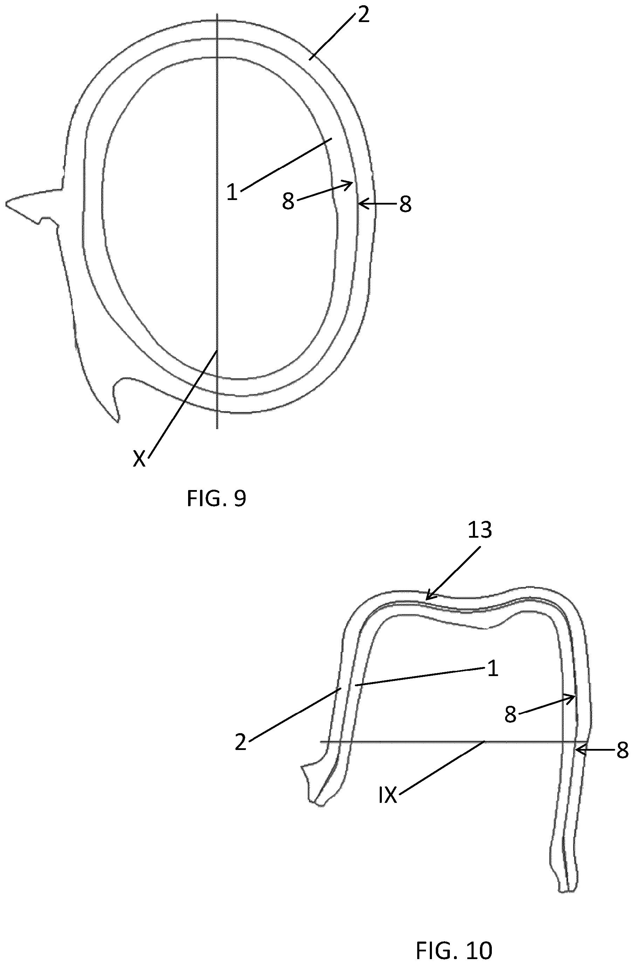

Die Fig. 9 und 10 zeigen jeweils Schnittansichten einer Anordnung von Primärteil 1 und Sekundärteil 2. Wie insbesondere aus der Fig. 9 hervorgeht, liegen das Primärteil 1 und das Sekundärteil 2 in der gezeigten Schnittebene vollständig und umlaufend aneinander an. Die Passgenauigkeit des Primärteils 1 und des Sekundärteils 2 ist somit von besonderes hoher Güte.

Wie insbesondere aus der Fig. 10 hervorgeht, sind das Primärteil 1 und das Sekundärteil 2 im oberen Bereich voneinander beabstandet unter Bildung eines Spalts 13.

### Bezugszeichenliste

- 1: Primärteil
- 2: Sekundärteil
- 3: Lagerabschnitt
- 4: Innenfläche
- 5: Außenfläche
- 6: Innenfläche
- 7: Außenfläche
- 8: Funktionsfläche
- 9: Außenfläche
- 10: Einschubrichtung
- 11: Kreiszylinder
- 12: Schulter
- 13: Spalt

## Patentansprüche

1. Computerimplementiertes Verfahren zum Erstellen eines digitalen Volumenmodells eines Primärteils (1) und eines digitalen Volumenmodells eines Sekundärteils (2) eines Zahnersatzes, insbesondere einer Doppelkrone, beispielsweise einer Teleskopkrone oder Konuskrone, wobei das Primärteil (1) mit einem in einem der Aufnahme des Zahnersatzes dienenden Mundbereich ausgebildeten Lagerabschnitt (3) verbindbar ist, wobei das Primärteil (1) eine dem Lagerabschnitt (3) zuzuwendende Innenfläche (4) und eine dem Lagerabschnitt (3) abzuwendende Außenfläche (5) aufweist, wobei das Sekundärteil (2) eine dem Primärteil (1) zuzuwendende Innenfläche (6) und eine dem Primärteil (1) abzuwendende Außenfläche (7) aufweist, wobei die Außenfläche (5) des Primärteils (1) und die Innenfläche (6) des Sekundärteils (2) zueinander korrespondierende Funktionsflächen (8), insbesondere zueinander korrespondierende Friktionsflächen, aufweisen, wobei das Verfahren umfasst:
- Bereitstellen eines 3D-Scans des der Aufnahme des Zahnersatzes dienenden Mundbereichs,
- Erzeugen der Innenfläche (4) des Volumenmodells des Primärteils (1) unter Verwendung des 3D-Scans des Mundbereichs derart, dass zumindest ein Teilbereich der Innenfläche (4) des Volumenmodells des Primärteils (1) zumindest zu einem Teilbereich einer Außenfläche (9) des Lagerabschnitts (3) korrespondiert,
- Erzeugen oder Bereitstellen der Außenfläche (7) des Volumenmodells des Sekundärteils (2),
wobei das Verfahren zusätzlich die folgenden Verfahrensschritte umfasst:
- Erzeugen oder Bereitstellen der Außenfläche (5) des Volumenmodells des Primärteils (1),
- Erzeugen der Innenfläche (6) des Volumenmodells des Sekundärteils (2) unter Verwendung eines die Funktionsfläche (8) aufweisenden Bereichs der Außenfläche (5) des Volumenmodells des Primärteils (1) derart, dass die Innenfläche (6) des Volumenmodells des Sekundärteils (2) eine zu der Funktionsfläche (8) der Außenfläche (5) des Volumenmodells des Primärteils (1) korrespondierende Funktionsfläche (8) aufweist,
und/oder zusätzlich die folgenden Verfahrensschritte umfasst:
- Erzeugen oder Bereitstellen der Innenfläche (6) des Volumenmodells des Sekundärteils (2),
- Erzeugen der Außenfläche (5) des Volumenmodells des Primärteils (1) unter Verwendung eines die Funktionsfläche (8) aufweisenden Bereichs der Innenfläche (6) des Volumenmodells des Sekundärteils (2) derart, dass die Außenfläche (5) des Volumenmodells des Primärteils (1) eine zu der Funktionsfläche (8) der Innenfläche (6) des Volumenmodells des Sekundärteils (2) korrespondierende Funktionsfläche (8) aufweist.

2. Verfahren nach Anspruch 1, wobei bei der Durchführung des Verfahrens weder das Primärteil (1) noch das Sekundärteil (2) vorliegen.

3. Verfahren nach Anspruch 1 oder 2, wobei das Sekundärteil (2) entlang einer Einschubrichtung (10) auf das Primärteil (1) aufschiebbar ist.

4. Verfahren nach einem der Ansprüche 1 bis 3, wobei das Erzeugen des Volumenmodells des Primärteils (1) in einem ersten Koordinatensystem erfolgt und das Erzeugen des Volumenmodells des Sekundärteils (2) in einem zweiten Koordinatensystem erfolgt, wobei das erste Koordinatensystem und das zweite Koordinatensystem identisch sind oder Parameter zur Durchführung einer Koordinatentransformation bekannt sind.

5. Verfahren nach einem der Ansprüche 1 bis 4, wobei die Außenfläche (5) des Volumenmodells des Primärteils (1) und die Innenfläche (4) des Volumenmodells des Primärteils (1) entlang einer geschlossenen Verbindungslinie oder Verbindungsfläche miteinander verbunden sind und/oder wobei die Außenfläche (7) des Volumenmodells des Sekundärteils (2) und die Innenfläche (6) des Volumenmodells des Sekundärteils (2) entlang einer geschlossenen Verbindungslinie oder Verbindungsfläche miteinander verbunden sind.

6. Verfahren nach einem der Ansprüche 1 bis 5, wobei die zueinander korrespondierenden Funktionsflächen (8) Anschlagsflächen und/oder Führungsflächen und/oder Friktionsflächen und/oder Dichtflächen aufweisen.

7. Verfahren nach einem der Ansprüche 1 bis 6, wobei die Innenfläche (6) des Volumenmodells des Sekundärteils (2) identisch ist mit der Außenfläche (5) des Volumenmodells des Primärteils (1) oder zumindest bereichsweise ein Spalt (13) zwischen der Innenfläche (6) des Volumenmodells des Sekundärteils (2) und der Außenfläche (5) Volumenmodells des Primärteils (1) ausgebildet ist, insbesondere ein Spalt (13) zwischen korrespondierenden Funktionsflächen (8) 3 µm bis 5 µm beträgt.

8. Verfahren nach einem der Ansprüche 1 bis 7, wobei die Funktionsfläche (8) des Primärteils (1) und die korrespondierende Funktionsfläche (8) des Sekundärteils (2) zueinander parallel sind.

9. Verfahren nach einem der Ansprüche 1 bis 8, wobei das Erzeugen der Außenfläche (5) des Volumenmodells des Primärteils (1) und das Erzeugen der Innenfläche (6) des Volumenmodells des Sekundärteils (2) zeitgleich erfolgt.

10. Verfahren nach einem der Ansprüche 1 bis 9, wobei das Verfahren unter Verwendung eines CAD-Programms durchgeführt wird.

11. Verfahren nach einem der Ansprüche 1 bis 10, wobei das Verfahren umfasst:
- Erzeugen eines Volumenmodells eines Körpers, unter Verwendung des 3D-Scans des Mundbereichs derart, dass zumindest eine Innenfläche des Volumenmodells des Körpers zumindest zu einem Teilbereich einer Außenfläche (9) des Lagerabschnitts (3) korrespondiert, und das Volumenmodell des Körpers eine Außenfläche aufweist, wobei die Außenfläche des Volumenmodells des Körpers und die Innenfläche des Volumenmodells des Körpers entlang einer geschlossenen Verbindungslinie miteinander verbunden sind, und
- Erzeugen des Volumenmodells des Primärteils (1) und des Volumenmodells des Sekundärteils (2) durch Erzeugen einer innerhalb des Volumenmodels des Körpers liegenden Schnittfläche und Aufteilen des Volumenmodells des Körpers an dieser Schnittfläche.

12. Vorrichtung zur Datenverarbeitung, umfassend Mittel zur Ausführung des Verfahrens nach einem der Ansprüche 1 bis 11.

13. Computerprogramm, umfassend Befehle, die bei der Ausführung des Programms durch einen Computer diesen Veranlassen, das Verfahren nach einem der Ansprüche 1 bis 12 auszuführen.

14. Verfahren zum Herstellen eines Primärteils (1) und/oder eines Sekundärteils (2) eines Zahnersatzes, wobei das Verfahren umfasst:
- Ausführen des Verfahrens nach einem der Ansprüche 1 bis 11,
- Herstellung des Primärteils (1) und/oder Sekundärteils (2) basierend auf dem Volumenmodell des Primärteils (1) und/oder dem Volumenmodell des Sekundärteils (2) mittels eines computergestützten Fertigungsverfahrens, insbesondere mittels einer CNC-Werkzeugmaschine.

15. Verfahren nach Anspruch 14, wobei das Herstellen des Sekundärteils (2) und das Herstellen des Primärteils (1) zumindest teilweise zeitgleich, insbesondere zeitgleich, erfolgt.
